# EUROPÄISCHE PATENTSCHRIFT

(11) **EP 4 395 363 B1**
(45) Veröffentlichungstag und Bekanntmachung des Hinweises auf die Patenterteilung: **29.04.2026**
(21) Anmeldenummer: 23213145.8
(22) Anmeldetag: 29.11.2023
(51) Int. Cl.: H04Q 9/00

(54) **VERFAHREN ZUR SYNCHRONISATION VON SENSOREINHEITEN**
METHOD FOR SYNCHRONIZING SENSOR UNITS
PROCÉDÉ DE SYNCHRONISATION D'UNITÉS DE DÉTECTION

(30) Priorität: 30.12.2022 LU 503288
(43) Veröffentlichungstag der Anmeldung: 03.07.2024
(73) Patentinhaber: WILO SE, 44263 Dortmund (DE)
(72) Erfinder: Oettmeier, Martin, 44263 Dortmund (DE); Große Westhoff, Edgar, 44263 Dortmund (DE); Gentemann, Roland B., 44263 Dortmund (DE)
(74) Vertreter: Cohausz Hannig Borkowski Wißgott

(56) Entgegenhaltungen:
- US-A1- 2018 270 548
- US-A1- 2021 116 902
- MULADI MULADI ET AL: "Outdoor Air Quality Monitor Using MQTT Protocol on Smart Campus Network", 2018 INTERNATIONAL CONFERENCE ON SUSTAINABLE INFORMATION ENGINEERING AND TECHNOLOGY (SIET), IEEE, 10 November 2018 (2018-11-10), pages 216 - 219, XP033539099, DOI: 10.1109/SIET.2018.8693154

## Beschreibung

Die Erfindung betrifft ein Verfahren zur Synchronisation von Sensoreinheiten für die zeitgleiche Durchführung einer Messung zu einem definierten Messzeitpunkt an verschiedenen Orten durch wenigstens eine erste und eine zweite Sensoreinheit. Umfangreiche Untersuchungen von Eigenschaften technischer Einrichtungen, Aggregaten oder Umgebungen erfordern häufig die Verwendung mehrerer Sensoren, die an unterschiedlichen geografischen Orten der Einrichtung, am Aggregat oder in der Umgebung angeordnet sind, aber zeitgleich eine Messung aufnehmen. Ein Beispiel einer solchen Untersuchung sind Vibrationsmessungen an einem vergleichsweise großen Pumpenaggregat, wie z.B. einer sogenannten Splitcase-Pumpe, die den Einsatz mehrerer Sensoren an verschiedenen Stellen des Pumpenaggregats erfordern. Die Messdaten der verschiedenen Sensoren müssen zum gleichen Zeitpunkt und mit möglichst identischer Zeitbasis erfasst werden, um eine gute Grundlage für die weitere Analyse zu schaffen, wie beispielsweise eine Auswertung durch eine Spektralanalyse.

Um eine derartige Untersuchung durchzuführen, ist es üblich, eine komplexe Messtechnik am Ort der Einrichtung, des Aggregats oder der Umgebung aufzubauen, umfassend zumindest eine zentrale Steuer- und Auswerteeinrichtung und die genannten mehreren Sensoren. Die Steuer- und Auswerteeinrichtung weist eine Vielzahl von analogen und/ oder digitalen Eingängen (Inputs) auf, wobei den analogen Eingängen in der Regel Analog-Digital-Wandlern nachgeschaltet sind. Mittels entsprechender Leitungen bzw. Kabel, bei längeren Distanzen auch mittels Glasfaser, sind die Sensoren mit der Steuer- und Auswerteeinrichtung verbunden, und liefern ihr zeitgleich entsprechende Messsignale, denen die Steuer- und Auswerteeinrichtung aufgrund des zeitgleichen Empfangs bei ihr eine einheitliche Zeitbasis verleiht.

Es versteht sich von selbst, dass eine solche Steuer- und Auswerteeinrichtung zur Ausführung der Untersuchung kostenintensiv ist, wenn es mehrere Eingaben von einer Vielzahl von Sensoren gleichzeitig verarbeiten können soll. Die Anzahl der verwendbaren Sensoren ist jedoch regelmäßig limitiert, d.h. nicht völlig flexibel wählbar. Es sind modulare Konzepte von Messsystemen bekannt, bei denen die entsprechende Steuer- und Auswerteeinrichtung skalierbar bzw. durch zusätzliche Messmodule erweiterbar ist, um weitere Sensoren anschließen zu können. Nachteilig bei diesem Konzept ist allerdings weiterhin, dass der Endkunde für ungenutzte Hardware zahlt, wenn er nicht alle Sensoren oder Eingänge nutzt.

US 2021/0116902 A1 offenbart ein System, das Sensoren umfasst, die von einer Verwaltungsvorrichtung verwaltet werden. Die Verwaltungsvorrichtung kommuniziert über ein Netzwerk mit einem oder mehreren Sensoren. Jeder Sensor hält eine gemeinsame Zeit vor, die jedem Sensor durch dessen Betriebssystem bereitgestellt werden kann. Das System stellt einen Messbefehl bereit. Der Messbefehl kann ein elektrisches Signal sein, das die Sensoren anweist, eine Aktion auszuführen, wie beispielsweise synchrone Messungen an der einen oder mehreren Maschinen. Der Messbefehl kann eine Zeit (z. B. einen ersten Zeitwert) enthalten, zu der die Aktion auszuführen ist. Die Verwaltungsvorrichtung sendet den Messbefehl über das Netzwerk an die Sensoren.

US 2018/0270548 A1 offenbart ein cloud-verbundenes Sensorsystem, wobei entfernte Sensoren drahtlos mit einer Sensoreinrichtung verbunden sind. Der cloudbasierte Verarbeitungsdienst umfasst mindestens einen Prozessor, der mit Steuerungssoftware oder Skripten programmiert ist, die Messbefehle enthalten, welche die interne Hardwarekonfiguration der Einrichtung manipulieren, um Rohdaten über kabelgebundene Sensoren und/oder entfernte Sensoren zu erfassen. Diese Messbefehle umfassen sensorspezifische DAS-Einstellungen, die festlegen, wie die internen Hardwarekomponenten der Einrichtung betrieben werden, um Messungen durchzuführen oder Rohdaten unter Verwendung eines bestimmten an die Einrichtung gekoppelten kabelgebundenen oder drahtlosen Sensors zu erfassen. Die DAS-Einstellungen werden der Einrichtung über eine Echtzeit-Dauerverbindung (z. B. einen MQTT-Tunnel) zwischen dem Cloud-Dienst und der Einrichtung 10 übermittelt. Der cloudbasierte Verarbeitungsdienst sendet (broadcastet) oder veröffentlicht ein bestimmtes Topic, und die Hardware-API der Einrichtung abonniert das gesendete/veröffentlichte Topic. Topics können Messbefehle erzeugen. Die Messbefehle werden an verschiedene Sensoren gesendet. Die Benutzerinteraktion erfolgt über ein Handgerät. Die Einstellungen im Befehl geben die Dauer und den Zeitpunkt an, zu dem die Probe vor der Datenerfassung stimuliert wird.

Aufgabe der vorliegenden Erfindung ist es, eine einfache, erweiterbare und kostengünstige Untersuchungsmöglichkeit mit einer faktisch unbegrenzten Anzahl von Sensoreinheiten zu schaffen, die derart angesteuert werden, dass sie zu einem definierten Messzeitpunkt zeitgleich eine Messung durchführen.

Diese Aufgabe wird durch ein Verfahren mit den Merkmalen des Anspruchs 1 gelöst. Vorteilhafte Weiterbildungen sind in den Unteransprüchen angegeben und werden nachfolgend erläutert.

Erfindungsgemäß wird ein Verfahren vorgeschlagen, bei dem die Sensoreinheiten jeweils eine eigene Echtzeituhr und ein Funkmodul mit einer individuellen Kennung zur Kommunikation über ein Funknetzwerk, insbesondere ein zellulares Mobilfunknetz und das Internet mit einem entfernten Nachrichtenvermittlungsdienst aufweisen und folgende Schritte ausgeführt werden:
- Übertragen eines Messauftrags über die Durchführung der Messung zu dem definierten Messzeitpunkt an den Nachrichtenvermittlungsdienst durch einen Operator.
- Übertragen einer den Messzeitpunkt umfassenden ersten Nachricht vom Nachrichtenvermittlungsdienst an die erste Sensoreinheit und einer den Messzeitpunkt umfassenden zweiten Nachricht vom Nachrichtenvermittlungsdienst an die zweite Sensoreinheit,
- Ausführen des Messauftrags durch die erste und die zweite Sensoreinheit zum definierten Messzeitpunkt, indem die erste und die zweite Sensoreinheit jeweils Messdaten aufzeichnen, und
- Übertragen der jeweiligen Messdaten in der aufgezeichneten oder in einer aufbereiteten Form von der ersten und zweiten Sensoreinheit über den Nachrichtenvermittlungsdienst zum Operator und/ oder zu einer Auswertezentrale.

Die Grundidee der vorliegenden Erfindung besteht darin, Sensoreinheiten für eine Untersuchung bzw. Messung zu verwenden, die zeitlich und organisatorisch selbstständig, d.h. unabhängig voneinander Messdaten erfassen, die dann in die Cloud übertragen und dort ausgewertet werden, d.h. an einem beliebigen Ort entfernt zum Messort. Dazu müssen die Sensoreinheiten zum gleichen Zeitpunkt ausgelöst werden, so dass kohärente Messdaten vorliegen. Diese Synchronisation der Messungen wird durch den Nachrichtenvermittlungsdienst einerseits und die in den Sensoreinheiten integrierte Echtzeituhr sichergestellt. Die Sensoreinheiten können hierfür klein und kostengünstig (Low-Cost-Sensoren) sein, wobei dennoch durch die Vielzahl unterschiedlicher Messdaten, die ein Abbild des Zustands der Einrichtung, des Aggregats oder der Umgebung aus vielen Perspektiven liefern, eine hochwertige Analyse möglich ist.

Ein besonderer Vorteil der Erfindung liegt in der flexiblen Erweiterbarkeit der Installation. Je nach Bedarf kann eine unterschiedliche Anzahl von Sensoren verwendet werden.

Soweit im Rahmen der Erfindung von "zeitgleich" oder "gleicher Zeitpunkt" für den Beginn der Messung die Rede ist, sei angemerkt, dass sich diese Begriffe nicht auf eine nanosekunden- oder mikrosekundengenaue zeitgleiche Durchführung der Messung durch die Sensoreinheiten beziehen, da eine derart genaue Synchronisierung der Echtzeituhren der Sensoreinheiten nicht möglich ist. Vielmehr ist die zeitgleiche Durchführung der einzelnen Messungen so verstehen, dass sie auch zeitlich zueinander versetzt innerhalb eines Zeitintervalls von maximal einer Sekunde beginnen können. Es wird angenommen, dass in diesem Zeitintervall ein von den Sensoreinheiten erfasster Zustand bzw. eine gemessene Größe sich nicht oder für die Messung nur unwesentlich ändert. Ein zeitlicher Versatz von maximal einer Sekunde ist somit im Rahmen des Verfahrens noch als "zeitglich" zu betrachten.

Die Messung kann eine oder mehrere Messgrößen betreffen. Die Messgrößen können gleich oder unterschiedlich sein. Entsprechend kann eine Sensoreinheit einen oder mehrere Messsensoren aufweisen, um damit eine oder mehrere Messgrößen zu erfassen. Beispielsweise kann eine Sensoreinheit eine Kombination aus drei Beschleunigungssensoren sein, die jeweils eine Beschleunigung in Richtung x, y oder z messen. In diesem Fall erfasst eine Sensoreinheit drei Messgrößen gleicher Art. Eine andere Sensoreinheit kann beispielsweise einen Strom und eine Spannung messen, ggf. zusätzliche auch die elektrische Leistung erfassen. Auch in diesem Fall erfasst eine Sensoreinheit mehr als eine Messgröße, jedoch unterschiedlicher Art.

Es ist möglich, dass eine Sensoreinheit einen oder mehrere integrierte (interne) Sensoren aufweist, die die Messung durchführen. Alternativ oder kumulativ, kann eine Sensoreinheit eine oder mehrere Standardschnittstellen (0-10V, 4-20mA, 1-wire, PWM) aufweisen, an welche ein oder mehrere (externe) Sensoren angeschlossen sind.

Weiter alternativ oder kumulativ kann eine Sensoreinheit eine Vorverarbeitung der Messdaten, insbesondere in Form von Filtern oder Berechnungen umfassen, wie z.B. eine Tiefpassfilterung zur Reduktion von Rauschen, eine gleitende Mittelwertbildung oder eine Fouriertransformation, wobei dann diese vorverarbeiteten Sensorsignale die zu übertragenden Messdaten bilden. Die zu übertragenden Messdaten liegend dann also seitens der entsprechenden Sensoreinheit nicht in der aufgezeichneten Form (Rohform), sondern in einer aufbereiteten Form vor.

Die Messung kann über einen kurzen oder einen längeren Messzeitraum erfolgen. Ab dem definierten Messzeitzeitpunkt werden für eine definierte Zeit von den Sensoreinheiten eine oder mehrere Messgrößen aufgezeichnet, die später dann in die Cloud gesendet werden. Die Sampling-Zeiten der Sensoreinheiten können identisch oder unterschiedlich sein, da die Messgrößenaufzeichnungen einen gemeinsamen, bekannten, dem Messzeitpunkt entsprechenden Startzeitpunkt haben.

Als Cloud wird im allgemeinen Sprachgebrauch die verteilte Anordnung von miteinander über das Internet verbundenen Computern, genauer gesagt Servern, bezeichnet. Der Nachrichtenvermittlungsdienst wird auf einem solchen Server betrieben, so dass er Teil der Cloud ist.

Auch kann die Auswertezentrale ein Server der Cloud sein oder auf einem solchen betrieben werden, der über das Internet mit dem Nachrichtenvermittlungsdienst verbunden ist. Die Auswertezentrale kann alternativ auf einem Server angeordnet sein, der lediglich über ein lokales Netzwerk (LAN) mit dem Nachrichtenvermittlungsdienst verbunden ist. In einer weiteren Ausführungsvariante kann die Auswertezentrale auf demselben Server betrieben werden, wie der Nachrichtenvermittlungsdienst, so dass die Kommunikation zwischen Auswertezentrale und Nachrichtenvermittlungsdienst lediglich serverintern erfolgt.

Das Funknetzwerk kann ein sogenanntes LoRaWAN (Long Range Wide Area Network) sein, das speziell für das Internet der Dinge (IoT) entwickelt wurde und ein Netzwerkstandard für energieeffizientes Senden und Empfangen von Daten über große Entfernungen ist. Hierzu ist jedem Funkmodul eine eindeutige Kennung zugeordnet, über die es im Netzwerk identifiziert werden kann. In einem LoRaWAN stehen Zeitinformationen zur Verfügung, um die Echtzeituhren der Sensoreinheiten zu synchronisieren. Alternativ kann ein Zeitserver über das LoRaWAN abgefragt werden.

Für die Kommunikation mit dem zellularen Mobilfunknetz umfasst das Funkmodul einer jeden Sensoreinheit ein physisches oder virtuelles Teilnehmeridentifikationsmodul, allgemein als SIM-Karte bezeichnet. Diesem ist eine Kennung zugeordnet, die das Teilnehmeridentifikationsmodul und damit die Sensoreinheit eindeutig in dem Mobilfunknetz identifiziert und den Zugriff auf die Ressourcen des Mobilfunknetzes ermöglicht, insbesondere auf dessen Datennetzwerk, damit die jeweilige Sensoreinheit über das Mobilfunknetzwerk Zugriff auf das Internet erhält.

Vorzugsweise verwendet das Funkmodul den Funkstandard NB-IoT (Narrowband Internet of Things). Dies ist ein Low-Power-Wide-Area-Network (LPWAN)-Funkstandard, der von 3GPP für Mobilfunkgeräte und -dienste entwickelt wurde und in der Spezifikation 3GPP Release 13 (LTE Advanced Pro) im Juni 2016 festgelegt ist. Die Vorteile von NB-IoT bestehen in den niedrigen Kosten, einer langen Batterielaufzeit der Sensoreinheit und der hohen Verbindungsdichte. NB-IoT verwendet eine Teilmenge des LTE-Standards, beschränkt aber die Bandbreite auf ein einziges schmales Band von 200 kHz.

Der Nachrichtenvermittlungsdienst ist eine Kommunikationsplattform, die von einer Vielzahl an Teilnehmer (Clients) verwendet werden kann, wobei die Sensoreinheiten, der Operator und die Auswertezentrale jeweils als ein Teilnehmer zu betrachten sind. Der Nachrichtenvermittlungsdienst kann auch als Broker betrachtet werden, der Nachrichten zwischen den Teilnehmern vermittelt.

Der Operator kann als "Master" betrachtet werden, wohingegen die Sensoreinheiten "Slaves" bilden. Bei dem Operator kann es sich um eine Software handeln, die eine Kommunikationsschnittstelle zum Nachrichtenvermittlungsdienst bildet, so dass eine natürliche Person oder aber auch ein Computerprogramm Nachrichten an den Nachrichtenvermittlungsdienst übermitteln und erhalten kann, insbesondere Messaufträge erstellen und Messdaten erhalten kann.

Vorzugsweise erfolgt die Kommunikation über den Nachrichtenvermittlungsdienst ausschließlich innerhalb themenbezogener Nachrichtenkanäle, in denen einerseits Nachrichten von den Teilnehmern zu einem bestimmen Thema gepostet werden können und die andererseits von den Teilnehmern abgehört werden können. Der Nachrichtenvermittlungsdienst veröffentlicht den Inhalt einer geposteten Nachricht in dem Nachrichtenkanal, indem er ihn an interessierte Teilnehmer überträgt.

Somit kann vorgesehen sein, dass der definierte Messzeitpunkt vom Nachrichtenvermittlungsdienst in einem bestimmten, im (geposteten) Messauftrag identifizierten Nachrichtenkanal veröffentlicht wird. Bei dem Messauftrag handelt es sich folglich um eine Nachricht mit für den Nachrichtenkanal bestimmtem Inhalt.

Vorzugsweise identifiziert der Messauftrag nicht nur den Nachrichtenkanal, z.B. "Messung", sondern spezifiziert auch seinen Inhalt durch Verwendung einer Parameterangabe wie z.B. "Zeitpunkt". Somit können interessierte Teilnehmer gezielt auf einen bestimmten Inhalt von in dem Nachrichtenkanal geposteten Nachrichten hören.

Sinnvollerweise meldet sich der Operator vor dem Übertragen des Messauftrags zunächst bei dem Nachrichtenvermittlungsdienst an, um den Messzeitpunkt zu hinterlegen. Erst nach der Anmeldung besteht eine dedizierte Client-Server Beziehung zwischen dem Operator und dem Nachrichtenvermittlungsdienst. Selbiges kann für die Sensoreinheiten vorgesehen sein.

Es ist möglich, dass die Teilnehmer, d.h. der Operator, Auswertezentrale, sowie erste und/ oder zweite Sensoreinheit dauerhaft mit dem Nachrichtenvermittlungsdienst verbunden bleiben oder nur temporär mit ihm verbunden sind. Letzteres spart Strom und ist zur Erhöhung der Lebensdauer der vorzugsweise batterie- oder akkubetriebenen Sensoreinheiten zu bevorzugen.

Um einerseits Energie zu sparen, andererseits aber keine für sie bestimmten Nachrichten wie z.B. Messaufträge, zu verpassen, melden sich die erste und zweite Sensoreinheit jeweils und unabhängig voneinander regelmäßig nach Ablauf eines Meldeintervalls bei dem Nachrichtenvermittlungsdienst an. Beispielsweise kann das Meldeintervall im Bereich von 30 Minuten und 24 Stunden liegen, vorzugsweise zwischen 1 und 6 Stunden.

Um Nachrichten auf dem Nachrichtenkanal zu erhalten, können die erste und zweite Sensoreinheit jeweils nach der Anmeldung bei dem Nachrichtenvermittlungsdienst den Nachrichtenkanal abonnieren.

Um zu vermeiden, dass eine Sensoreinheit aufgrund des nur temporären Anmeldens beim Nachrichtenvermittlungsdienst eine für sie bestimmte Nachrichte verpasst, kann der Operator den Messauftrag zu einem Zeitpunkt übertragen, der mehr als die Länge des Meldeinterfalls früher als der definierte Messzeitpunkt ist. Dies stellt sicher, dass die Sensoreinheiten über den Messzeitpunkt informiert werden.

Es kann vorgesehen sein, dass der Messzeitpunkt nur für eine bestimmte zeitliche Dauer am Nachrichtenvermittlungsdienst vorgehalten wird, und nach Ablauf der Dauer gelöscht wird. Somit wird der Speicherbedarf für den Nachrichteninhalt reduziert. Für die genannte Dauer sollte der Messzeitpunkt jedoch am Nachrichtenvermittlungsdienst vorgehalten werden, damit er sich nachträglich anmeldenden Sensoreinheiten zur Verfügung gestellt werden kann. Die Dauer sollte länger als das Meldeintervall der Sensoreinheiten sein, damit die Übertragung des Messzeitpunkts an die Sensoreinheiten sichergestellt ist.

Zweckmäßigerweise erfolgt die Übertragung der ersten Nachricht vom Nachrichtenübermittlungsdienst an die erste Sensoreinheit nur oder erst dann, wenn sich die erste Sensoreinheit am Nachrichtenvermittlungsdienst angemeldet und den Nachrichtenkanal abonniert hat. In entsprechender Weise erfolgt bevorzugt die Übertragung der zweiten Nachricht vom Nachrichtenübermittlungsdienst an die zweite Sensoreinheit nur oder erst dann erfolgt, wenn sich die zweite Sensoreinheit am Nachrichtenvermittlungsdienst angemeldet und den Nachrichtenkanal abonniert hat.

Wie bereits erwähnt, ist vorgesehen, dass sich die erste und zweite Sensoreinheit jeweils und unabhängig voneinander nach Ablauf eines Anmeldezeitraums bei dem Nachrichtenvermittlungsdienst abmelden, um Energie zu sparen.

Nach Ausführung des Messauftrags kann die erste Sensoreinheit wenigstens eine erste Messdaten umfassende erste Messnachricht zum Nachrichtenvermittlungsdienst übertragen, und die zweite Sensoreinheit wenigstens eine zweite Messdaten umfassende zweite Messnachricht zum Nachrichtenvermittlungsdienst übertragen, und zwar unabhängig voneinander und zu ggfs. unterschiedlichen Zeitpunkten. Sofern die Messdaten aufgrund ihrer Datengröße bzw. Datenmenge nicht in eine Messnachricht passen, können sie auf zwei oder mehr Messnachrichten verteilt werden.

Die jeweilige Übertragung der ersten und zweiten Messnachricht erfolgt geeigneterweise erst dann, wenn sich die erste und zweite Sensoreinheit jeweils und unabhängig voneinander wieder beim Nachrichtenvermittlungsdienst angemeldet hat. Mit anderen Worten vergeht nach der Messung noch ein wenig Zeit, bis die Messdaten an die Auswertezentrale übertragen werden.

Hierzu können dann die ersten Messdaten vom Nachrichtenvermittlungsdienst in einem bestimmten, in der ersten Messnachricht identifizierten Nachrichtenkanal veröffentlicht werden. Ferner können die zweiten Messdaten vom Nachrichtenvermittlungsdienst in einem bestimmten, in der zweiten Messnachricht identifizierten Nachrichtenkanal veröffentlicht werden. Es sei angemerkt, dass die Nachrichtenkanäle nicht identisch sein müssen. Ferner können sie sich auch von dem Nachrichtenkanal unterscheiden, in dem der Messzeitpunkt veröffentlicht worden ist. Gleichwohl ist es aufgrund der Einfachheit und des thematischen Bezugs zueinander sinnvoll, wenn die in den Messnachrichten identifizierten Nachrichtenkanäle denselben Nachrichtenkanal bezeichnen und dieser identisch ist mit dem Nachrichtenkanal, der in dem Messauftrag angegeben ist.

Nach dem Erhalt der ersten und zweiten Messnachricht kann der Nachrichtenvermittlungsdienst jeweils wenigstens eine erste, die ersten Messdaten umfassende Veröffentlichungsnachricht, und wenigstens eine zweite, die zweiten Messdaten umfassende Veröffentlichungsnachricht an die Auswertezentrale und/ oder den Operator übertragen. Sofern die Messdaten aufgrund ihrer Datengröße bzw. Datenmenge nicht in eine Veröffentlichungsnachricht passen, können sie auf zwei oder mehr Veröffentlichungsnachrichten verteilt werden, die dann seitens des Empfängers, d.h. der Auswertezentrale oder des Operators, dann wieder zu den ursprünglichen Messdaten zusammengefügt werden.

In einer Ausführungsvariante kann der Operator die Auswertezentrale mitumfassen. In einer anderen Ausführungsvariante kann die Auswertezentrale dem Operator nachgelagert sein, so dass dieser die Messdaten an die Auswertezentrale weiterleitet.

Vorzugsweise erfolgt die Übertragung der ersten und zweiten Messdaten, wenn oder sobald sich die Auswertezentrale bzw. der Operator am Nachrichtenvermittlungsdienst angemeldet und den in der jeweiligen Messnachricht identifizierten Nachrichtenkanal abonniert hat.

Nach Erhalt der ersten und zweiten Messdaten werden diese gemeinsam in der Auswertezentrale und/ oder beim Operator ausgewertet.

Die genannten Messdaten können entweder Rohdaten sein, die von einem entsprechenden Sensor der ersten bzw. zweiten Sensoreinheit S1, S2 erfasst worden sind, oder alternativ vorverarbeitete Daten sein, die sich beispielsweise durch Filterung, Glättung, Mittelwertbildung oder Transformation, wie z.B. eine Fouriertransformation, aus den Rohdaten ergeben.

Damit die Sensoreinheiten ihre jeweilige Echtzeituhr eichen, kann vorgesehen sein, dass sie diese mit einem Zeitsignal bzw. einer Uhrzeit synchronisieren, das/ die ihnen ein Zeitzeichensender als Rundfunksignal, das Mobilfunknetz, der Nachrichtenvermittlungsdienst, ein NTP-Server, und/ oder ein globales Navigationssatellitensystem (GPS) bereitstellt.

Es sei noch darauf hingewiesen, dass das Zeitsignal bzw. die Uhrzeit und die Echtzeituhr nicht unbedingt in dem Format Stunden, Minuten und Sekunden angegeben sein muss. Ebenso können andere Zeitformate, wie z.B. ein einfacher Zähler, verwendet werden.

Um die zuvor beschriebenen Verfahrensschritte auszuführen, kann der Nachrichtenvermittlungsdienst ein MQTT-Broker sein, beispielsweise gemäß dem MQTT Version 5.0 OASIS Standard vom 7.3.2019. MQTT (Message Queuing Telemetry Transport) ist ein offenes Netzwerkprotokoll für die Machine-to-Machine-Kommunikation, das die Übertragung von Telemetriedaten in Form von Nachrichten zwischen Geräten ermöglicht, trotz hoher Verzögerungen oder beschränkter Netzwerke.

Das erfindungsgemäße Verfahren kann besonders zur Durchführung und Auswertung von Vibrationsmessungen an einem Kreiselpumpenaggregat verwendet werden.

Weitere Merkmale, Eigenschaften, Wirkungen und Vorteile der Erfindung werden nachfolgend anhand von Ausführungsbeispielen und der beigefügten Figuren näher erläutert. Die in den Figuren enthaltenen Bezugszeichen behalten von Figur zu Figur ihre Bedeutung. In den Figuren bezeichnen Bezugszeichen stets dieselben oder zumindest äquivalente Komponenten, Bereiche, Richtungs- oder Ortsangaben.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus.

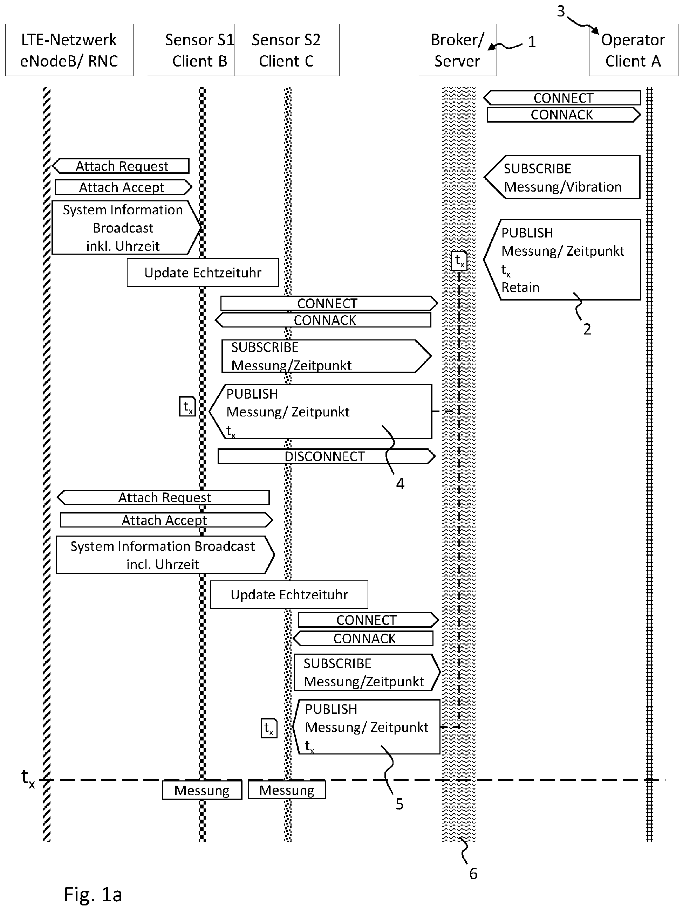

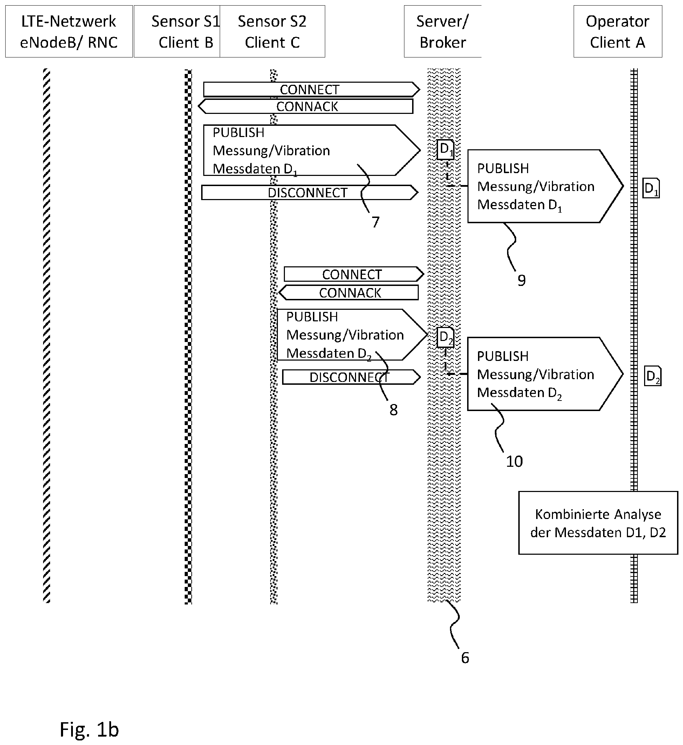

Figuren 1a und 1b zeigen einen beispielhaften zeitlichen Ablauf der erfindungsgemäßen Kommunikation über einen Nachrichtenvermittlungsdienst zur Synchronisierung einer von zwei Sensoreinheiten ausgeführten Messung.

Der Nachrichtenvermittlungsdienst 1 ist ein MQTT Broker, an dem sich in der Art einer Server-Client Beziehung eine nahezu beliebige Anzahl an Clients anmelden können, um Nachrichten innerhalb eines bestimmten Nachrichtenkanals zu hinterlegen oder zu erhalten. Der Nachrichtenvermittlungsdienst 1 bildet in diesem Fall den Server. Er ist mit dem Internet verbunden und kann auf diese Weise entsprechend erreicht werden. In dem hier gezeigten Beispiel sind drei Clients vorhanden, wobei ein erster Client A ein Operator 3 ist, der die Durchführung einer Messung zu einem von ihm bestimmten Messzeitpunkt tx durch eine erste Sensoreinheit S1 und eine zweite Sensoreinheit S2 wünscht, die in Bezug zum Nachrichtenvermittlungsdienst 1 die weiteren zwei Clients B und C bilden. In einer anderen Ausführungsvariante können auch viele weitere Sensoreinheiten vorgesehen sein, die Clients des Nachrichtenvermittlungsdienstes 1 bilden.

Der Operator 3 kann als eine von einem Nutzer bediente Software verstanden werden, die beispielsweise auf einem Endgerät wie einem Computer (Personal Computer), einem Tablet oder einem Smartphone läuft, wobei das Endgerät mit dem Internet verbunden ist, um über das Internet mit dem Nachrichtenvermittlungsdienst 1 in Verbindung zu treten. Hierzu stellt der Operator 3 eine Verbindungsanfrage "CONNECT" an den Nachrichtenvermittlungsdienst 1, die von diesem durch eine anschließende Verbindungsannahme "CONNACK" quittiert wird. Hiernach ist der Operator 3 beim Nachrichtenvermittlungsdienst 1 angemeldet. Er bleibt für die Dauer des hier betrachteten Verfahrens angemeldet.

Nach der Anmeldung abonniert der Operator 3 einen ersten Nachrichtenkanal 6 "Messung/ Vibration" (SUBSCRIBE), um darin veröffentlichte Nachrichten mit Messdaten zu erhalten. Des Weiteren hinterlegt er in einem zweiten Nachrichtenkanal 6 "Messung/ Zeitpunkt" (PUBLISH) einen Messauftrag 2, dessen Inhalt der Messzeitpunkt tx ist, zu dem die Sensoreinheiten S1, S2 die Messung vornehmen sollen. Die Aufgabe des Nachrichtenvermittlungsdienstes 1 ist es, die für einen bestimmten Nachrichtenkanal 6 vorgesehenen Nachrichten zu veröffentlichen, indem er entsprechende Nachrichten 4, 5, 9, 10 all jenen Clients A, B unverzüglich zustellt, die diesen Nachrichtenkanal 6 abonniert haben.

Zum Zeitpunkt der Hinterlegung des Messzeitpunkts tx durch den Operator 3 hat im vorliegenden Beispiel noch kein weiterer Client den zweiten Nachrichtenkanal 6 abonniert. Der Nachrichtenvermittlungsdienst 1 würde in diesem Fall den Messzeitpunkt tx löschen. Um dies jedoch zu verhindern oder zumindest zu verzögern wird der Messzeitpunkt tx mit dem Attribut "Retain" gekennzeichnet und dadurch vor eine definierte zeitliche Dauer vom Nachrichtenvermittlungsdienst 1 zum Zwecke der späteren Veröffentlichung vorgehalten.

Die Sensoreinheiten S1, S2 sind an verschiedenen Orten angeordnet, d.h. räumlich voneinander getrennt. Sie sind jeweils eingerichtet, eine Vibrationsmessung an einem Kreiselpumpenaggregat vorzunehmen, an dem sie befestigt sind. Sie besitzen jeweils eine eigene Echtzeituhr, um die Messung zum Messzeitpunkt tx durchzuführen.

Des Weiteren besitzen die Sensoreinheiten S1, S2 jeweils ein Funkmodul mit einer individuellen Kennung in Gestalt einer virtuellen oder physischen SIM-Karte, um sich in ein zelluläres Mobilfunknetz einzubuchen und darüber Zugang zum Internet, mithin zum Nachrichtenvermittlungsdienst 1 zu erhalten. Das Mobilfunknetz ist in diesem Fall beispielhaft ein LTE-Netzwerk (Long Time Evolution), d.h. ein Mobilfunknetzwerk der 4. Generation. Das Einbuchen der Sensoreinheiten S1, S2 in das Mobilfunknetz erfolgt über eine entsprechende Basisstation (NodeB, eNodeB) und daran angeschlossener Steuereinrichtung (RNC - Radio Network Controller) des Mobilfunknetzes in allgemein bekannter Weise gemäß der Spezifikation der Standardisierungsorganisation *3rd Generation Partnership Project* (3GPP).

Um sich mit dem Mobilfunknetz zu verbinden, sendet zunächst die erste Sensoreinheit S1 eine Einbuchungsanfrage "Attach Request" an das Mobilfunknetz, die von diesem mit einer Bestätigung "Attach Accept" beantwortet wird, so dass die erste Sensoreinheit S1 über das Mobilfunknetz Zugriff auf das Internet erhält.

Das Mobilfunknetz überträgt an alle seine eingebuchten Teilnehmer Systeminformationen (System Information Broadcast), die eine Uhrzeit (Zeitsignal) enthalten. Diese wird von der ersten Sensoreinheit S1 verwendet, um seine interne Echtzeituhr zu aktualisieren (upzudaten), d.h. mit der Zeitinformation des Mobilfunknetzes zu synchronisieren. Alternativ oder zusätzlich kann die erste Sensoreinheit S1 einen Zeitserver im Internet (NTP-Server) abfragen, das Rundfunksignal eines Zeitzeichensenders empfangen und/ oder die Uhrzeit eines globalen Navigationssatellitensystems (GPS) empfangen, und seine Echtzeituhr mit der so erhaltenen Uhrzeit abgleichen. Die genannte zeitliche Aktualisierung kann wiederholt, insbesondere regelmäßig stattfinden.

Um sich beim Nachrichtenvermittlungsdienst 1 anzumelden, was über das Mobilfunknetz und das Internet erfolgt, schickt die erste Sensoreinheit S1 wie zuvor der Operator 3 eine Verbindungsanfrage "CONNECT" an den Nachrichtenvermittlungsdienst 1, die von diesem durch eine anschließende Verbindungsannahme "CONNACK" quittiert wird. Hiernach ist auch die Sensoreinheit S1 beim Nachrichtenvermittlungsdienst 1 angemeldet.

Die erste Sensoreinheit S1 abonniert anschließend den zweiten Nachrichtenkanal "Messung/ Zeitpunkt" (SUBSCRIBE), um über einen etwaigen Messauftrag 2 des Operators 3 informiert zu werden. Dies veranlasst den Nachrichtenvermittlungsdienst 1 den zuvor in dem zweiten Nachrichtenkanal "Messung/ Zeitpunkt" hinterlegten und aufgrund des Attributs "Retain" vorgehaltenen Messzeitpunkt tx des Messauftrags 2 der ersten Sensoreinheit S1 öffentlich zu machen, indem der Nachrichtenvermittlungsdienst 1 eine erste Nachricht 4, die den Messzeitpunkt tx enthält, an die erste Sensoreinheit S1 überträgt. Dies erfolgt -wie zuvor- über das Internet und das Mobilfunknetz. Die erste Sensoreinheit S1 empfängt die erste Nachricht 4 und speichert den Messzeitpunkt tx ab. Um Energie zu sparen, meldet sich die erste Sensoreinheit S1 anschließend vom Nachrichtenvermittlungsdienst 1 ab, indem sie eine entsprechende Abmeldeinformation "DISCONNECT" an den Nachrichtenvermittlungsdienst 1 überträgt. Diese bleibt hier unquittiert, weil die erste Sensoreinheit S1 anschließend schon nicht mehr erreichbar ist.

Um weiter Energie zu sparen, kann sich die erste Sensoreinheit S1 auch vom Mobilfunknetz abmelden. Dies ist in Fig. 1a jedoch nicht dargestellt.

Die mit Bezug zur ersten Sensoreinheit S1 beschriebenen Verfahrensschritte werden auch bei der zweiten Sensoreinheit S2 durchgeführt. Um sich mit dem Mobilfunknetz zu verbinden, sendet daher auch die zweite Sensoreinheit S2 zunächst eine Einbuchungsanfrage "Attach Request" an das Mobilfunknetz, die von diesem mit einer Bestätigung "Attach Accept" beantwortet wird, so dass auch die zweite Sensoreinheit S2 über das Mobilfunknetz Zugriff auf das Internet erhält. Die vom Mobilfunknetz übertragene Uhrzeit wird auch von der zweiten Sensoreinheit S2 verwendet, um seine interne Echtzeituhr zu aktualisieren (upzudaten), d.h. mit der Zeitinformation des Mobilfunknetzes zu synchronisieren. Alternativ oder zusätzlich kann die erste Sensoreinheit S1 einen Zeitserver im Internet (NTP-Server) abfragen, das Rundfunksignal eines Zeitzeichensenders empfangen und/ oder die Uhrzeit eines globalen Navigationssatellitensystems (GPS) empfangen, und seine Echtzeituhr mit der so erhaltenen Uhrzeit abgleichen. Die genannte zeitliche Aktualisierung kann wiederholt, insbesondere regelmäßig stattfinden.

Um sich beim Nachrichtenvermittlungsdienst 1 anzumelden, schickt die zweite Sensoreinheit S2 eine Verbindungsanfrage "CONNECT" an den Nachrichtenvermittlungsdienst 1, die von diesem durch eine anschließende Verbindungsannahme "CONNACK" quittiert wird. Hiernach ist auch die Sensoreinheit S2 beim Nachrichtenvermittlungsdienst 1 angemeldet. Sie abonniert anschließend den zweiten Nachrichtenkanal "Messung/ Zeitpunkt" (SUBSCRIBE), um über einen etwaigen Messauftrag 2 des Operators 3 informiert zu werden. Der Nachrichtenvermittlungsdienst 1 stellt daraufhin den zuvor in dem zweiten Nachrichtenkanal "Messung/ Zeitpunkt" veröffentlichten und aufgrund des Attributs "Retain" noch immer vorgehaltenen Messzeitpunkt tx des Messauftrags der zweiten Sensoreinheit S2 zu, indem der Nachrichtenvermittlungsdienst 1 eine zweite Nachricht 5, die den Messzeitpunkt tx enthält, an die zweite Sensoreinheit S2 überträgt. Auch dies erfolgt über das Internet und das Mobilfunknetz. Die zweite Sensoreinheit S2 empfängt die zweite Nachricht 5 und speichert den Messzeitpunkt tx ab.

Um Energie zu sparen, meldet sich auch die zweite Sensoreinheit S2 vom Nachrichtenvermittlungsdienst 1 wieder ab, indem sie eine entsprechende Abmeldeinformation "DISCONNECT" an den Nachrichtenvermittlungsdienst 1 überträgt. Auch diese bleibt unquittiert. Um weiter Energie zu sparen, kann sich auch die zweite Sensoreinheit S1 vom Mobilfunknetz abmelden. Dies ist in Fig. 1a jedoch nicht dargestellt.

Obgleich diese, die zweite Sensoreinheit S2 betreffenden Verfahrensschritte in Figur 1a chronologisch nach denjenigen der ersten Sensoreinheit S1 dargestellt sind, sei angemerkt, dass dies hier lediglich zur Vereinfachung und aus Gründen der Übersichtlichkeit so gewählt ist. Tatsächlich können die die zweite Sensoreinheit S2 betreffenden Verfahrensschritte auch zeitlich parallel zu den Verfahrensschritten der ersten Sensoreinheit S1 ausgeführt werden, da die erste und zweite Sensoreinheit S1, S2 voneinander unabhängig sind und selbst den Zeitpunkt ihrer Verbindungsaufnahme mit dem Mobilfunknetz und dem Nachrichtenvermittlungsdienst 1 bestimmen, was insbesondere auch abhängig vom Zeitpunkt der Inbetriebnahme des jeweiligen Sensors sein kann. So können sich die erste und zweite Sensoreinheit S1, S2 jeweils und unabhängig voneinander regelmäßig nach Ablauf eines Meldeintervalls bei dem Nachrichtenvermittlungsdienst 1 anmelden, um über gegebenenfalls neu veröffentlichte Nachrichten, insbesondere Messaufträge 2 informiert zu werden. Entsprechend können sich die erste und zweite Sensoreinheit S1, S2 jeweils und unabhängig voneinander nach Ablauf eines Anmeldezeitraums bei dem Nachrichtenvermittlungsdienst 1 abmelden.

Aufgrund der Unbestimmtheit, wann sich eine der Sensoreinheiten S1, S2 beim Nachrichtenvermittlungsdienst 1 meldet, überträgt der Operator 3 den Messauftrag 2 zu einem Zeitpunkt, der mehr als die Länge des Meldeinterfalls früher als der definierte Messzeitpunkt tx ist. Außerdem ist die zeitliche Dauer, für die der Messzeitpunkt tx am Nachrichtenvermittlungsdienst 1 vorgehalten wird, länger als das Meldeintervall der Sensoreinheiten S1, S2. Nach Ablauf der Dauer wird der Messzeitpunkt tx gelöscht.

Die erste und zweite Sensoreinheit S1, S2 warten anschließend darauf, dass der Messzeitpunkt tx eintritt. Hierzu vergleichen sie jeweils die aktuelle Zeit der internen Echtzeituhr mit dem Messzeitpunkt tx und starten bei Erreichen des Messzeitpunktes tx gleichzeitig ihre jeweilige Messung. Dies ist in Figur 1a durch die horizontale gestrichelte Linie veranschaulicht. Die erste und zweite Sensoreinheit S1, S2 zeichnen dann Messdaten D1, D2 auf, und führen somit den ursprünglichen Messauftrag 2 zum definierten Messzeitpunkt tx aus.

Die Messung kann für einen mehr oder weniger langen Messzeitraum erfolgen. Dabei sei angemerkt, dass die Messzeiträume der ersten und zweiten Sensoreinheit S1, S2 nicht unbedingt gleich lang sein müssen.

Die nach der jeweiligen Messung der ersten und zweiten Sensoreinheit S1, S2 durchzuführenden Verfahrensschritte sind in Figur 1b dargestellt. Hier ist vorgesehen, dass alle Sensoreinheiten Sensoreinheit S1, S2 ihre Messdaten an den Nachrichtenvermittlungsdienst 1 übertragen, der diese dann an den Operator 3 vermittelt.

Hierzu meldet sich zunächst die erste Sensoreinheit S1 wieder mit einer entsprechenden Verbindungsanfrage "CONNECT" beim Nachrichtenvermittlungsdienst 1 an, der diese Anfrage quittiert (CONNACK). Anschließend sendet die erste Sensoreinheit S1 eine erste Messnachricht 7, die die Messdaten D1 der ersten Sensoreinheit S1 enthält, zur Veröffentlichung in dem ersten Nachrichtenkanal "Messung/ Vibration" (PUBLISH), der in der ersten Messnachricht 7 identifiziert ist, an den Nachrichtenvermittlungsdienst 1. Anschließend meldet sich die erste Sensoreinheit S1 wieder vom Nachrichtenvermittlungsdienst 1 ab (DISCONNECT). Sofern die Messdaten D1 zu groß für eine einzige Messnachricht 7 sind, kann die erste Sensoreinheit S1 die Messdaten D1 auch aufteilen und in mehreren Messnachrichten 7 an den Nachrichtenvermittlungsdienst 1 übertragen.

Da der Operator 3 den ersten Nachrichtenkanal abonniert hat, veröffentlicht der Nachrichtenvermittlungsdienst 1 die Messdaten D1 der ersten Sensoreinheit S1, indem er dem Operator 3 eine erste Veröffentlichungsnachricht 9 zusendet, die die Messdaten D1 enthält. Der Operator 3 entnimmt die Messdaten D1 der ersten Veröffentlichungsnachricht 9 und speichert sie ab.

In analoger Weise meldet sich die zweite Sensoreinheit S2 wieder mit einer entsprechenden Verbindungsanfrage "CONNECT" beim Nachrichtenvermittlungsdienst 1 an, der diese Anfrage quittiert (CONNACK). Anschließend sendet die zweite Sensoreinheit S2 eine zweite Messnachricht 8, die die Messdaten D2 der zweiten Sensoreinheit S2 enthält, zur Veröffentlichung in dem ersten Nachrichtenkanal "Messung/ Vibration" (PUBLISH), der in der zweiten Messnachricht 8 identifiziert ist, an den Nachrichtenvermittlungsdienst 1. Anschließend meldet sich die zweite Sensoreinheit S2 wieder vom Nachrichtenvermittlungsdienst 1 ab (DISCONNECT). Sofern die Messdaten D2 zu groß für eine einzige Messnachricht 8 sind, kann auch die zweite Sensoreinheit S2 die Messdaten aufteilen und in mehreren Messnachrichten 8 an den Nachrichtenvermittlungsdienst 1 übertragen.

Der Nachrichtenvermittlungsdienst 1 leitet die in der zweiten Messnachricht veröffentlichten Messdaten D2 der zweiten Sensoreinheit S2 an den Operator 3 weiter, indem er ihm eine zweite Veröffentlichungsnachricht 10 zusendet, die die Messdaten D2 enthält. Der Operator 3 entnimmt die Messdaten D2 der zweiten Veröffentlichungsnachricht 10 und speichert sie ab. Er kann anschließend aufgrund der gemeinsamen Zeitbasis der Messdaten D1, D2 eine kombinierte Analyse durchführen.

In einer anderen Ausführungsvariante kann vorgesehen sein, dass die kombinierte Analyse in einer Auswertezentrale erfolgt. Der Operator 3 kann die Messdaten an diese weiterleiten. Alternativ kann auch die Auswertezentrale ein Client des Nachrichtenvermittlungsdienstes 1 sein, sich bei diesem entsprechend anmelden, den ersten Nachrichtenkanal abonnieren und somit die Messdaten D1, D2 zugestellt bekommen, nachdem sie von der entsprechenden Sensoreinheit S1, S2 in den ersten Nachrichtenkanal veröffentlicht worden sind.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls", "geeignet" oder dergleichen angegeben sind, sind als rein fakultativ zu betrachten und schränken ebenfalls den Schutzbereich nicht ein, welcher ausschließlich durch die Ansprüche festgelegt ist.

## Patentansprüche

1. Verfahren zur Synchronisation von Sensoreinheiten (S1, S2) für die zeitgleiche Durchführung einer Messung zu einem definierten Messzeitpunkt (tₓ) an verschiedenen Orten durch wenigstens eine erste und eine zweite Sensoreinheit, die jeweils eine eigene Echtzeituhr und ein Funkmodul mit einer individuellen Kennung zur Kommunikation über ein Funknetzwerk, insbesondere ein zellulares Mobilfunknetz und das Internet mit einem entfernten Nachrichtenvermittlungsdienst (1) aufweisen, umfassend die Schritte
- Übertragen eines Messauftrags (2) über die Durchführung der Messung zu dem definierten Messzeitpunkt (tₓ) an den Nachrichtenvermittlungsdienst (1) durch einen Operator (3),
- Übertragen einer den Messzeitpunkt (tₓ) umfassenden ersten Nachricht (4) vom Nachrichtenvermittlungsdienst (1) an die erste Sensoreinheit (S1) und einer den Messzeitpunkt (tₓ) umfassenden zweiten Nachricht (5) vom Nachrichtenvermittlungsdienst (1) an die zweite Sensoreinheit (S2),
- Ausführen des Messauftrags (2) durch die erste und die zweite Sensoreinheit (S1, S2) zum definierten Messzeitpunkt (tₓ), indem die erste und die zweite Sensoreinheit jeweils Messdaten (D1, D2) aufzeichnen und
- Übertragen der jeweiligen Messdaten (D1, D2) in der aufgezeichneten oder in einer aufbereiteten Form von der ersten und zweiten Sensoreinheit (S1, S2) über den Nachrichtenvermittlungsdienst (1) zum Operator (3) und/ oder zu einer Auswertezentrale,
wobei sich die erste und zweite Sensoreinheit (S1, S2) jeweils und unabhängig voneinander regelmäßig nach Ablauf eines Meldeintervalls bei dem Nachrichtenvermittlungsdienst (1) anmelden und jeweils und unabhängig voneinander nach Ablauf eines Anmeldezeitraums bei dem Nachrichtenvermittlungsdienst (1) abmelden.

2. Verfahren nach Anspruch 1, **dadurch gekennzeichnet, dass** der definierte Messzeitpunkt (tₓ) vom Nachrichtenvermittlungsdienst (1) in einem bestimmten, im Messauftrag (2) identifizierten Nachrichtenkanal (6) veröffentlicht wird.

3. Verfahren nach Anspruch 2, **dadurch gekennzeichnet, dass** sich der Operator (3) zunächst bei dem Nachrichtenvermittlungsdienst (1) anmeldet, um den Messzeitpunkt (tₓ) zu hinterlegen.

4. Verfahren zumindest nach Anspruch 2, **dadurch gekennzeichnet, dass** die erste und zweite Sensoreinheit (S1, S2) jeweils nach der Anmeldung bei dem Nachrichtenvermittlungsdienst (1) den Nachrichtenkanal (6) abonniert.

5. Verfahren nach einem der vorherigen Ansprüche, **dadurch gekennzeichnet, dass** der Operator (3) den Messauftrag (2) zu einem Zeitpunkt überträgt, der mehr als die Länge des Meldeinterfalls früher als der definierte Messzeitpunkt (tₓ) ist.

6. Verfahren nach einem der vorherigen Ansprüche, **dadurch gekennzeichnet, dass** der Messzeitpunkt (tₓ) nur für eine bestimmte zeitliche Dauer am Nachrichtenvermittlungsdienst (1) vorgehalten wird, die länger als das Meldeintervall der Sensoreinheiten (S1, S2) ist, und nach Ablauf der Dauer gelöscht wird.

7. Verfahren zumindest nach Anspruch 2, **dadurch gekennzeichnet, dass** die Übertragung der ersten Nachricht (4) nur oder erst dann erfolgt, wenn sich die erste Sensoreinheit (S1) am Nachrichtenvermittlungsdienst (1) angemeldet und den Nachrichtenkanal (6) abonniert hat, und/ oder dass die Übertragung der zweiten Nachricht (5) nur oder erst dann erfolgt, wenn sich die zweite Sensoreinheit (S2) am Nachrichtenvermittlungsdienst (1) angemeldet und den Nachrichtenkanal (6) abonniert hat.

8. Verfahren nach einem der vorherigen Ansprüche, **dadurch gekennzeichnet, dass** nach Ausführung des Messauftrags (2) die erste Sensoreinheit (S1) wenigstens eine erste Messdaten (D1) umfassende erste Messnachricht (7) zum Nachrichtenvermittlungsdienst (1) überträgt, und die zweite Sensoreinheit (S2) wenigstens eine zweite Messdaten (D2) umfassende zweite Messnachricht (8) zum Nachrichtenvermittlungsdienst (1) überträgt.

9. Verfahren nach Anspruch 8, **dadurch gekennzeichnet, dass** die jeweilige Übertragung der ersten und zweiten Messnachricht (7, 8) erst dann erfolgt, wenn sich die erste und zweite Sensoreinheit (S1, S2) jeweils und unabhängig voneinander wieder beim Nachrichtenvermittlungsdienst (1) angemeldet hat.

10. Verfahren nach Anspruch 8 oder 9, **dadurch gekennzeichnet, dass** die ersten Messdaten (D1) vom Nachrichtenvermittlungsdienst (1) in einem bestimmten, in der ersten Messnachricht (7) identifizierten Nachrichtenkanal (6) veröffentlicht werden, und/ oder die zweiten Messdaten (D2) vom Nachrichtenvermittlungsdienst (1) in einem bestimmten, in der zweiten Messnachricht (8) identifizierten Nachrichtenkanal (6) veröffentlicht werden.

11. Verfahren nach einem der Ansprüche 8 bis 10, **dadurch gekennzeichnet, dass** der Nachrichtenvermittlungsdienst (1) jeweils wenigstens eine erste, die ersten Messdaten (D1) umfassende Veröffentlichungsnachricht (9), und wenigstens eine zweite, die zweiten Messdaten (D2) umfassende Veröffentlichungsnachricht (10) an die Auswertezentrale und/ oder den Operator (3) überträgt, insbesondere wenn oder sobald diese/ dieser sich am Nachrichtenvermittlungsdienst (1) angemeldet und den in der jeweiligen Messnachricht (7) identifizierten Nachrichtenkanal (6) abonniert hat.

12. Verfahren nach einem der vorherigen Ansprüche, **dadurch gekennzeichnet, dass** die ersten und zweiten Messdaten (D1, D2) gemeinsam in der Auswertezentrale und/ oder beim Operator (3) ausgewertet werden.

13. Verfahren nach einem der vorherigen Ansprüche, **dadurch gekennzeichnet, dass** die Sensoreinheiten (S1, S2) ihre jeweilige Echtzeituhr mit einem Zeitsignal synchronisieren, das ihnen ein Zeitzeichensender als Rundfunksignal, das Mobilfunknetz, der Nachrichtenvermittlungsdienst (1), ein NTP-Server, und/ oder ein globales Navigationssatellitensystem (GPS) bereitstellt.

## Claims

1. Method for the synchronisation of sensor units (S1, S2) for simultaneously taking a measurement at a defined time of measurement (tₓ) at different locations, using at least one first and one second sensor unit, respectively having their own real-time clock and a wireless module with an individual identifier for communication via a wireless network, notably a cellular mobile communications network, and the Internet with a remote messaging service (1), comprising the steps of
- transmitting, by an operator (3), a measurement order (2) to take the measurement at the defined time of measurement (tₓ) to the messaging service (1),
- transmitting a first message (4) comprising the time of measurement (tₓ) from the messaging service (1) to the first sensor unit (S1) and a second message (5) comprising the time of measurement (tₓ) from the messaging service (1) to the second sensor unit (S2),
- executing the measurement order (2) by the first and second sensor units (S1, S2) at the defined time of measurement (tₓ) in that the first and second sensor units (D1, D2) respectively record measurement data, and
- transmitting the respective measurement data (D1, D2) in the recorded or an edited form from the first and second sensor units (S1, S2) via the messaging service (1) to the operator (3) and/or to an evaluation centre,
in which the first and second sensor units (S1, S2) respectively and independently of each other regularly check in with the messaging service (1) after the end of a reporting interval and, respectively and independently of each other, check out with the messaging service (1) after the end of a check-in interval.

2. Method according to claim 1, **characterised in that** the defined time of measurement (tₓ) is published by the messaging service (1) on a defined message channel (6) identified in the measurement order (2).

3. Method according to claim 2, **characterised in that** the operator (3) initially checks in with the messaging service (1) in order to record the time of measurement (tₓ).

4. Method at least according to claim 2, **characterised in that** the first and second sensor units (S1, S2), respectively after checking in with the messaging service (1), subscribe to the message channel (6).

5. Method according to one of the preceding claims, **characterised in that** the operator (3) transmits the measurement order (2) at a point in time that is more than the length of the reporting interval earlier than the defined time of measurement (tₓ).

6. Method according to one of the preceding claims, **characterised in that** the time of measurement (tₓ) is held available by the messaging service (1) for only a certain period of time that is longer than the reporting interval of the sensor units (S1, S2) and being erased after that time ends.

7. Method at least according to claim 2, **characterised in that** the transmission of the first message (4) takes place only when or after the first sensor unit (S1) has checked in with the messaging service (1) and has subscribed to the message channel (6), and/or the transmission of the second message (5) taking place only when or after the second sensor unit (S2) has checked in with the messaging service (1) and has subscribed to the message channel (6).

8. Method according to one of the preceding claims, **characterised in that** the first sensor unit (S1) transmits a first measurement message (7) comprising at least a first set of measurement data (D1) to the messaging service (1) and the second sensor unit (S2) transmitting a second measurement message (8) comprising at least a second set of measurement data (D2) to the messaging service (1) after execution of the measurement order (2) .

9. Method according to claim 8, **characterised in that** the respective transmission of the first and second measurement messages (7, 8) takes place only after the first and second sensor units (S1, S2), respectively and independently of each other, have checked in with the messaging service (1).

10. Method according to claim 8 or 9, **characterised in that** the first set of measurement data (D1) is published by the messaging service (1) in a defined message channel (6) identified in the first measurement message (7) and/or the second set of measurement data (D2) being published by the messaging service (1) in a defined message channel (6) identified in the second measurement message (8).

11. Method according to one of the claims 8 through 10, **characterised in that** the messaging service (1) transmits respectively at least one first publication message (9) comprising the first set of measurement data (D1) and at least one second publication message (10) comprising the second set of measurement data (D2) to the evaluation centre and/or to the operator (3), notably when or as soon as they have checked in with the messaging service (1) and subscribed to the message channel (6) identified in the respective measurement message (7).

12. Method according to one of the preceding claims, **characterised in that** the first and second sets of measurement data (D1, D2) are jointly evaluated in the evaluation centre and/or by the operator (3).

13. Method according to one of the preceding claims, **characterised in that** the sensor units (S1, S2) synchronise their respective real-time clock with a time signal provided to them by a time signal transmitter as a radio signal, by the mobile communications network, the messaging service (1), an NTP server and/or a global navigation satellite system (GPS).

## Revendications

1. Procédé de synchronisation d'unités de détection (S1, S2) pour effectuer simultanément une mesure à un instant de mesure défini (tₓ) à différents emplacements par au moins une première et une deuxième unité de détection, chacun équipé d'une horloge en temps réel et d'un module de transmission avec un identifiant individuel pour la communication via un réseau sans fil, notamment un réseau de téléphonie mobile cellulaire, et via Internet avec un service de messagerie distant (1), comprenant les étapes suivantes :
- Transmission, par un opérateur (3), d'un ordre de mesure (2) concernant la réalisation de la mesure à l'instant de mesure défini (tₓ) au service de messagerie (1),
- Transmission d'un premier message (4) comprenant l'instant de mesure (tₓ) depuis le service de messagerie (1) vers la première unité de détection (S1) et d'un deuxième message (5) comprenant l'instant de mesure (tₓ) depuis le service de messagerie (1) vers la deuxième unité de détection (S2),
- Exécution de l'ordre de mesure (2) par la premier et la deuxième unité de détection (S1, S2) à l'instant de mesure défini (tₓ), la premier et la deuxième unité de détection enregistrant respectivement des données de mesure (D1, D2) et
- Transmission des données de mesure respectives (D1, D2) sous forme enregistrée ou traitée depuis la premier et la deuxième unité de détection (S1, S2) via le service de messagerie (1) vers l'opérateur (3) et/ou vers une centrale d'évaluation,
sachant que la premier et la deuxième unité de détection (S1, S2) se connectent respectivement et indépendamment l'une de l'autre régulièrement au service de messagerie (1) après expiration d'un intervalle de notification et se déconnectant respectivement et indépendamment l'une de l'autre du service de messagerie (1) après expiration d'une période de connexion.

2. Procédé selon la revendication 1, **caractérisé en ce que** l'instant de mesure défini (tₓ) est publié par le service de messagerie (1) dans un canal de messagerie (6) déterminé, identifié dans l'ordre de mesure (2).

3. Procédé selon la revendication 2, **caractérisé en ce que** l'opérateur (3) se connecte d'abord auprès du service de messagerie (1) pour enregistrer l'instant de mesure (tₓ).

4. Procédé selon au moins la revendication 2, **caractérisé en ce que** la premier et la deuxième unité de détection (S1, S2) s'abonnent chacun au canal de messagerie (6) après s'être connectés au service de messagerie (1).

5. Procédé selon l'une des revendications précédentes, **caractérisé en ce que** l'opérateur (3) transmet l'ordre de mesure (2) à un moment antérieur à l'instant de mesure défini (tₓ) et d'une durée plus longue que l'intervalle de notification.

6. Procédé selon l'une des revendications précédentes, **caractérisé en ce que** l'instant de mesure (tₓ) n'est conservé, au niveau du service de messagerie, que pendant une durée déterminée (1) supérieure à l'intervalle de notification des unités de détection (S1, S2), et est supprimé à l'expiration de cette durée.

7. Procédé selon au moins la revendication 2, **caractérisé en ce que** la transmission du premier message (4) n'a lieu que ou seulement lorsque la premier unité de détection (S1) s'est connecté au service de messagerie (1) et s'est abonné au canal de messagerie (6), et/ou **en ce que** la transmission du deuxième message (5) n'a lieu que lorsque la deuxième unité de détection (S2) s'est connecté au service de messagerie (1) et s'est abonné au canal de messagerie (6).

8. Procédé selon l'une des revendications précédentes, **caractérisé en ce qu'**après l'exécution de l'ordre de mesure (2), la premier unité de détection (S1) transmet au moins un premier message de mesure (7) comprenant des premières données de mesure (D1) au service de messagerie (1), et que la deuxième unité de détection (S2) transmet au moins un deuxième message de mesure (8) comprenant des deuxièmes données de mesure (D2) au service de messagerie (1).

9. Procédé selon la revendication 8, **caractérisé en ce que** la transmission respective du premier et du deuxième message de mesure (7, 8) n'a lieu que lorsque la premier et la deuxième unité de détection (S1, S2) se sont à nouveau connectés, indépendamment l'un de l'autre, au service de messagerie (1).

10. Procédé selon la revendication 8 ou 9, **caractérisé en ce que** les premières données de mesure (D1) sont publiées par le service de messagerie (1) dans un canal de messages (6) déterminé, identifié dans le premier message de mesure (7), et/ou les deuxièmes données de mesure (D2) sont publiées par le service de messagerie (1) dans un canal de messages (6) déterminé, identifié dans le deuxième message de mesure (8).

11. Procédé selon l'une des revendications 8 à 10, **caractérisé en ce que** le service de messagerie (1) transmet au centre d'évaluation et/ou à l'opérateur (3) au moins un premier message de publication (9) comprenant les premières données de mesure (D1) et au moins un deuxième message de publication (10) comprenant les deuxièmes données de mesure (D2) à la centrale d'évaluation et/ou à l'opérateur (3), en particulier lorsque ou dès que celle-ci ou celui-ci s'est connecté au service de messagerie (1) et s'est abonné au canal de messagerie (6) identifié dans le message de mesure (7) correspondant.

12. Procédé selon l'une des revendications précédentes, **caractérisé en ce que** les premières et deuxièmes données de mesure (D1, D2) sont évaluées conjointement dans la centrale d'évaluation et/ou chez l'opérateur (3).

13. Procédé selon l'une des revendications précédentes, **caractérisé en ce que** les unités de détection de détection (S1, S2) synchronisent leur horloge en temps réel respective avec un signal temporel qui leur est fourni par un émetteur de signal temporel sous forme de signal radio, le réseau de téléphonie mobile, le service de messagerie (1), un serveur NTP et/ou un système mondial de navigation par satellite (GPS).
